# EUROPEAN PATENT SPECIFICATION

(11) **EP 2 647 290 B1**
(45) Date of publication and mention of the grant of the patent: **28.01.2015**
(21) Application number: 13161930.6
(22) Date of filing: 02.04.2013
(51) Int. Cl.: A21C 9/08, B65H 19/10

(54) **ASSEMBLY AND METHOD FOR ORIENTING A DOUGH PIECE**
BAUGRUPPE UND VERFAHREN ZUR AUSRICHTUNG EINES TEIGSTÜCKS
ENSEMBLE ET PROCÉDÉ POUR L'ORIENTATION D'UN BOUT DE PÂTE

(30) Priority: 02.04.2012 NL 2008584
(43) Date of publication of application: 09.10.2013
(73) Proprietor: Kaak, Johan Hendrik Bernard, 7011 DZ Gaanderen (NL)
(72) Inventor: Van Opstal, Erik Dionisius Gabriel Maria, 5222 BS 'S-Hertogenbosch (NL)
(74) Representative: Peters, Sebastian Martinus

(56) References cited:
- EP-A2- 1 342 415
- DE-A1- 19 747 472
- DE-U1-202008 003 923
- NL-C2- 1 025 310
- US-A1- 2010 302 554

## Description

### BACKGROUND OF THE INVENTION

The invention relates to an assembly and a method for orienting a dough piece. Especially for detecting a seam in a dough piece and placing the dough piece on a basis such that the seam of the dough piece is placed in a substantially desired orientation.

Such an assembly is for instance known from German patent application DE 197 47 472 A1. This document describes an assembly provided with a roll system comprising two rolls that can be driven in the same direction via a common shaft. Furthermore one of the two rolls is provided with a lifting cylinder for lifting the one roll with respect to the other for ejecting a dough piece placed on the two rolls.

As shown in figure 4 of German patent application DE 197 47 472 A1, a video camera is placed straight above the rolls and the assembly is provided with a light source for illuminating a dough piece placed on the two rolls. The dough piece is then illuminated such that the video camera is able to record a seam in the dough piece by means of a shadow image. Obtaining a properly discernible shadow of a seam requires the light to be incident in a grazing manner on the position where the seam is situated.

While operational a dough piece placed on the two rolls is continuously rotated around while the video camera records images. Said images are compared in a computer to a computer-stored image of a dough piece with a seam. If an image from the video camera corresponds with the stored image a signal is given, which with a calculated delay activates the lifting cylinder for ejecting the dough piece such that the dough piece is placed on a basis in a wanted orientation, for instance with the seam facing downward.

A drawback of the known assembly is that for determining the position of the seam the dough piece needs to be continuously rotated around while the video camera continuously records images that all need to be analysed for determining the seam as such and its position. As a result the known assembly is relatively slow and thus constitutes a defining factor in the onward flow of dough pieces in a dough processing installation.

It is an object of the present invention to provide an assembly and a method for orienting dough pieces that enable a larger onward flow of dough pieces.

### SUMMARY OF THE INVENTION

According to a first aspect the invention for that purpose provides an assembly for orienting dough pieces comprising:
a positioning device having a dough piece holder for positioning a dough piece placed on the dough piece holder,
a supply device for supplying dough pieces to the positioning device,
a control device for controlling the positioning device,
a camera placed with a viewing direction towards the dough piece holder for recording images of a dough piece placed on the dough piece holder and for transmitting a signal relating to the images to the control device, and
an illumination device comprising a first lamp, wherein the first lamp is placed with a first illumination direction towards the dough piece holder, wherein the illumination direction is placed at an angle to the viewing direction, wherein the illumination device comprises at least a second lamp, wherein the second lamp is placed with a second illumination direction towards the dough piece holder, and wherein the first and second lamp comprise a line laser.

By using at least two lamps different parts of the dough piece can be illuminated, which enables the accurate determination of whether the seam of the dough piece is situated in the part pictured by the camera, without the dough piece having to be rotated around. Particularly the use of two line lasers ensuring a line-shaped illumination of the dough piece holder, enables the detection, with a large degree of reliability, of a seam of a dough piece placed and substantially sitting still on the dough piece holder and situated in the range of vision of the camera. Thus it will not be required for the assembly according to the invention to continuously rotate the dough piece around during recording images and the position of the seam can be determined sufficiently accurately by the analysis of one or only a few images from the camera. Sufficiently accurately means, sufficiently accurately for positioning the seam of the dough piece such that the seam of the dough piece, at being placed in a baking pan, faces a bottom wall of the baking pan. The assembly according to the invention is thus able to work faster than the known assemblies do.

If no seam is detected in the part of the dough piece pictured by the camera, the seam will be situated in the part of the dough piece facing away from the camera. If so required the positioning device is able to position the part facing away from the camera in a desired position, particularly such that the part of the dough piece facing away from the camera, at being placed in a baking pan, faces a bottom wall of the baking pan.

If the seam is detected in the part of the dough piece pictured by the camera, the position of the seam can be determined. If so required the positioning device is able to position the seam in a desired position, particularly such that the seam is placed in a part of the dough piece that, at being placed in a baking pan, faces the bottom wall of the baking pan.

In one embodiment a position of the camera, the first and the second lamp define a plane, and at least one of the line lasers is adapted for providing a line-shaped illumination of a dough piece on the dough piece holder, wherein the line of light extends substantially transverse to the plane. In one embodiment the dough piece holder is adapted and/or placed such that a longitudinal direction of an elongated dough piece on the dough piece holder is oriented substantially parallel to the plane. If an elongated dough piece is placed on the dough piece holder, the line-shaped illuminations will be oriented substantially transverse to the longitudinal direction of the dough piece and extend substantially over the width of the dough piece and it can be determined whether the seam of the dough piece is situated within said width.

The line-shaped illumination provides a line of light extending over the dough piece, particularly over the width of the dough piece. If the line of light runs over a part of the dough piece that does not comprise a seam, the line of light will generally have a continuous course. If the line of light runs over a part of the dough piece that comprises a seam indeed, the line of light will show a discontinuity at the location of the seam. From the images from the camera, perceiving the line of light, it can be determined whether the line of light runs substantially continuously or has a discontinuity. If the line of light perceived by the camera runs substantially continuously, there is no seam in the range of vision of the camera. If the line of light perceived by the camera has a discontinuity, there is indeed a seam in the range of vision of the camera, namely at the location of the discontinuity.

In one embodiment the first lamp projects a first line of light and the second lamp projects a second line of light, wherein the first line of light is placed in the longitudinal direction spaced apart from the second line of light. By placing the first and second lines of light spaced apart in the longitudinal direction, it can be determined at two locations along the longitudinal direction whether there is a seam in the range of vision of the camera and where the seam is situated. If there is a seam in the range of vision of the camera, the course of the seam along the longitudinal direction of the dough piece can be determined by means of the two lines of light placed spaced apart in the longitudinal direction.

In one embodiment the second illumination direction and the viewing direction include an angle that substantially equals the angle between the first illumination direction and the viewing direction. In one embodiment the first line-shaped illumination and the second line-shaped illumination are placed substantially parallel to each other. In that way the projected first and second lines of light will extend substantially parallel over the dough piece, as a result of which a deviation in the shape of a dough piece, for instance a cylindrical dough piece, and/or a deviation in the orientation of the dough piece, can easily be recognized in the image from the camera. In case of a deviation in the shape, the first and second lines of light projected on the dough piece will have different shapes and/or no longer run parallel to each other over the dough piece. In case of a deviation in the orientation of the dough piece the projected second line of light will be shifted with respect to the projected first line of light in a direction extending substantially transverse to the plane determined by the position of the camera, the first and second lamp.

In a simple embodiment the second lamp is placed next to the camera on a same side as the first lamp, wherein the second lamp is placed on a side of the first lamp, which side faces away from the camera.

According to a second aspect the invention provides an assembly for orienting dough pieces comprising:
a positioning device having a dough piece holder for positioning a dough piece placed on the dough piece holder,
a supply device for supplying dough pieces to the positioning device,
a control device for controlling the positioning device,
a camera placed with a viewing direction towards the dough piece holder for recording images of a dough piece placed on the dough piece holder and for transmitting a signal relating to the images to the control device, and
an illumination device comprising a first lamp, wherein the first lamp is placed with a first illumination direction towards the dough piece holder, wherein the illumination direction is placed at an angle to the viewing direction, wherein the illumination device comprises at least a second lamp placed next to the camera on the same side as the first lamp, wherein the second lamp is placed with a second illumination direction towards the dough piece holder, wherein the second lamp is placed on a side of the first lamp, which side faces away from the camera.

By using at least two lamps different parts of the dough piece can be illuminated, which enables the accurate determination of whether the seam of the dough piece is situated in the part pictured by the camera, without the dough piece having to be rotated around.

If no seam is detected in the part of the dough piece pictured by the camera, the seam will be situated in the part of the dough piece facing away from the camera. If so required the positioning device is able to position the part facing away from the camera in a desired position, particularly such that the part of the dough piece facing away from the camera, at being placed in a baking pan, faces a bottom wall of the baking pan.

If the seam is detected in the part of the dough piece pictured by the camera, the position of the seam can be determined. If so required the positioning device is able to position the seam in a desired position, particularly such that the seam is placed in a part of the dough piece that, at being placed in a baking pan, faces the bottom wall of the baking pan.

Thus it will not be required for the assembly according to the invention to continuously rotate the dough piece around during recording images and the position of the seam can be determined sufficiently accurately by the analysis of one or only a few images from the camera. Sufficiently accurately means, sufficiently accurately for positioning the seam of the dough piece such that the seam of the dough piece, at being placed in a baking pan, faces the bottom wall of the baking pan. The assembly according to the invention is thus able to work faster than the known assemblies do.

In one embodiment the first lamp and the second lamp comprise a flash light, and wherein the illumination device is adapted for successively operating the first and the second lamp for successively producing a flash of light. During the flash of light from the first lamp a first shadow image of a first part of the dough piece can be recorded and it can be examined whether a seam is situated in this first part of the dough piece. Subsequently during the flash of light from the second lamp a second shadow image of a second part of the dough piece can be recorded and it can be examined whether a seam is situated in this second part of the dough piece. In this way the part of the dough piece that is in the range of vision of the camera can be examined in sections without the dough piece having to be rotated.

In one embodiment the second illumination direction and the viewing direction include an angle that differs from the angle between the first illumination direction and the viewing direction. Particularly for a substantially round dough piece, the second lamp will as a result be incident in a grazing manner on another part of the dough piece than the first lamp.

In one embodiment a position of the camera, the first and the second lamp define a plane, and the dough piece holder is adapted and/or placed such that a longitudinal direction of an elongated dough piece on the dough piece holder is oriented substantially transverse to the plane. In one embodiment the illumination device is placed on a side of the camera facing the supply device. In that way an optimal illumination for obtaining a shadow image of a seam can be obtained, also because the seam extends substantially parallel to the elongated dough piece.

In one embodiment of the assembly according to the first and/or the second aspect, the dough piece holder comprises two rotatable rolls that are placed at least substantially parallel adjacent to each other. Such a dough piece holder is particularly advantageous for elongated, substantially cylindrical dough pieces.

In one embodiment the rolls can be moved between a first position in which the rolls are placed near each other for supporting a dough piece, and a second position in which the rolls are placed spaced apart for passing through a dough piece in between the rolls. In that way on the one hand a better control can be achieved over the position of the dough piece, at least during conveying the dough piece onwards, particularly from the dough piece holder to a baking pan placed underneath the dough piece holder. On the other hand during conveying the dough piece onwards, meaning passing the dough piece in between the rolls, the dough piece can be actively driven by the rolls for accelerating the transfer of the dough piece from the dough piece holder to the baking pan.

In one embodiment the two rotatable rolls can be driven individually. It is particularly advantageous if at least the rotary direction of the two rolls can be set individually. For positioning a dough piece placed on the dough piece holder it is advantageous that the two rolls can be driven in substantially the same direction. For passing a dough piece placed on the dough piece holder in between the rolls, it is advantageous that the two rolls are driven substantially in opposite direction.

In one embodiment the supply device comprises a belt conveyor, wherein above the belt conveyor a roll-up device, for coiling a dough sheet into a substantially cylindrical dough piece is placed.

According to a third aspect, the invention provides a method for orienting dough pieces comprising the steps of:
placing a dough piece on a dough piece holder of a positioning device,
recording a first image of the dough piece placed on the dough piece holder by means of a camera placed with a viewing direction towards the dough piece holder, wherein the dough piece is illuminated by means of an illumination device comprising a first lamp, wherein the first lamp is placed with a first illumination direction towards the dough piece holder, wherein the illumination direction is placed at an angle to the viewing direction,
transmitting a signal relating to the first image to a control device,
controlling the positioning device by the control device depending on the signal relating to the first image,
wherein the illumination device comprises at least a second lamp placed next to the camera on the same side as the first lamp, wherein the second lamp is placed with a second illumination direction towards the dough piece holder, wherein the first and second lamp comprise a line laser for projecting line-shaped illuminations on the dough piece, wherein the first lamp projects a first laser line and the second lamp projects a second laser line, wherein the first laser line is projected on the dough piece so as to be spaced apart from the second laser line.

In one embodiment a position of the camera, the first and the second lamp define a plane, and the line lasers are adapted for providing a line-shaped illumination on a dough piece on the dough piece holder, wherein the line extends substantially transverse to the plane.

According to a fourth aspect the invention provides a method for orienting dough pieces comprising the steps of:
placing a dough piece on a dough piece holder of a positioning device,
recording a first image of the dough piece placed on the dough piece holder by means of a camera placed with a viewing direction towards the dough piece holder, wherein the dough piece is illuminated by means of an illumination device comprising a first lamp, wherein the first lamp is placed with a first illumination direction towards the dough piece holder, wherein the illumination direction is placed at an angle to the viewing direction,
transmitting a signal relating to the first image to a control device,
recording a second image of the dough piece placed on the dough piece holder by means of the camera, wherein the dough piece is illuminated by means of the illumination device comprising a second lamp that is placed next to the camera on the same side as the first lamp, wherein the second lamp is placed with a second illumination direction towards the dough piece holder, wherein the second illumination direction and the viewing direction include an angle that differs from the angle between the first illumination direction and the viewing direction,
transmitting a signal relating to the second image to the control device,
controlling the positioning device by the control device depending on the signal relating to the first image and the second image.

In one embodiment the illumination device is adapted for successively operating the first and the second lamp for successively producing a flash of light, and wherein the first image is recorded during a flash of light from the first lamp and the second image is recorded during a flash of light from the second lamp.

In one embodiment of the method according to the above-mentioned third or fourth aspect, the dough piece holder comprises two rotatable rolls that are placed at least substantially parallel next to each other, wherein the rolls are driven by the control device.

In one embodiment the two rotatable rolls are driven individually for positioning a dough piece placed on the dough piece holder.

In one embodiment the rolls are placed near each other in a first position for supporting a dough piece during recording an image, and are moved to a second position in which the rolls are placed spaced apart for passing through a dough piece in between the rolls.

The aspects and measures described in this description and the claims of the application and/or shown in the drawings of this application may where possible also be used individually. Said individual aspects may be the subject of divisional patent applications relating thereto. This particularly applies to the measures and aspects that are described per se in the sub claims.

### SHORT DESCRIPTION OF THE DRAWINGS

The invention will be elucidated on the basis of a number of exemplary embodiments shown in the attached drawings, in which:
Figure 1A shows a schematic side view of a first exemplary embodiment of an assembly according to the invention;
Figure 1B shows a schematic front view of the first exemplary embodiment according to the invention;
Figures 2A and 2B show a camera image of a dough piece in the first exemplary embodiment, with and without a seam in the range of vision, respectively;
Figures 3A, 3B, 3C and 3D show schematic side views of steps in orienting a dough piece using the device according to the invention;
Figure 4A shows a schematic side view of a second exemplary embodiment of an assembly according to the invention; and
Figure 4B shows a schematic front view of the second exemplary embodiment according to the invention.

### DETAILED DESCRIPTION OF THE DRAWINGS

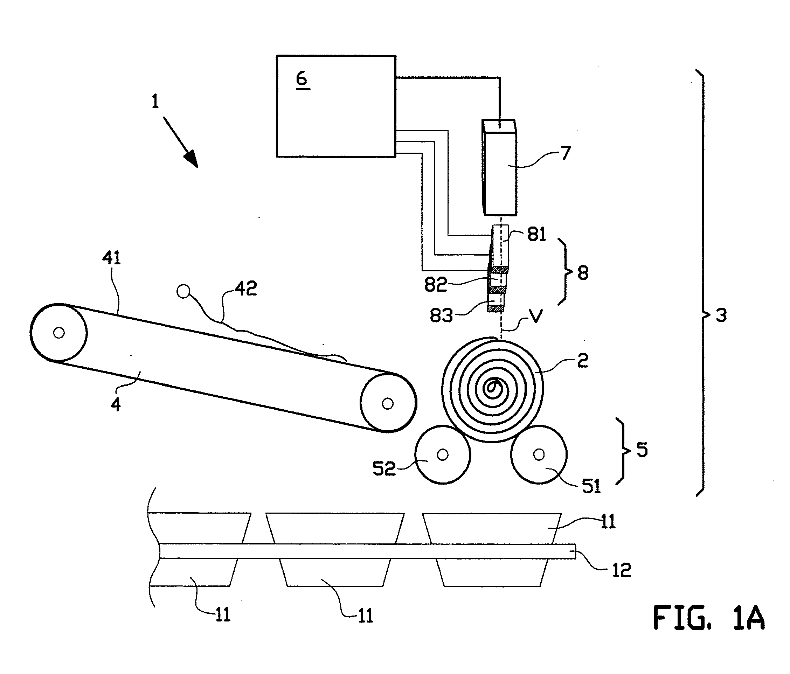

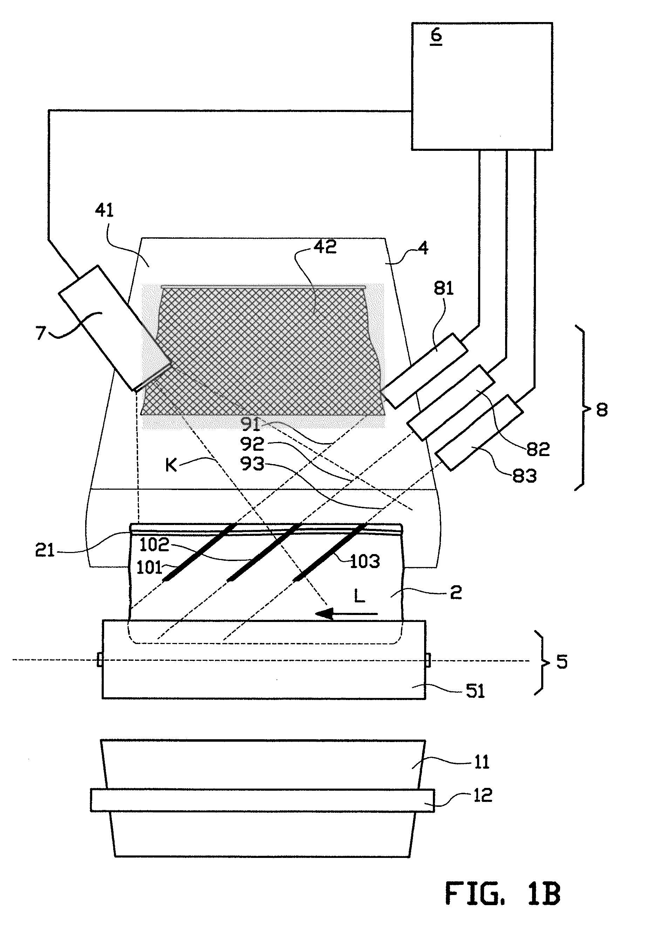

A first exemplary embodiment of an assembly 1 for orienting dough pieces 2 is schematically shown in figures 1A and 1B. The assembly 1 comprises a positioning device 3 and a supply device 4 for supplying dough pieces to the positioning device 3. The positioning device 3 comprises a dough piece holder 5 for positioning a dough piece 2 placed on the dough piece holder 5, a control device 6 for controlling the positioning device, and a camera 7. The camera 7 is placed with a viewing direction K (see figure 1B) towards the dough piece holder 5 for recording images of a dough piece 2 placed on the dough piece holder 5 and is connected to the control device 6 for transmitting a signal relating to the images to the control device 6. The positioning device 3 further comprises an illumination device 8 comprising at least a first and a second lamp, in this exemplary embodiment three lamps 81, 82, 83, the illumination directions 91, 92, 93 (see figure 1B) of which are towards the dough piece holder 5, wherein the illumination directions 91, 92, 93 are placed at an angle to the viewing direction K. The three lamps 81, 82, 83 are placed next to the camera 7 on a same side and each comprise a line laser.

The camera 7 and the three line lasers 81, 82, 83 are placed such that they each define a plane V as schematically indicated in figure 1A. The viewing direction K, and the illumination directions 81, 92, 93 are also that plane V, extending substantially parallel to the rolls 51, 52 of the dough piece holder 5. The plane V also extends substantially parallel to an elongated dough piece 2 situated on the rolls 51, 52. The line lasers 81, 82, 83 are adapted for providing a line-shaped illumination of a dough piece 2 on the dough piece holder 5, wherein the line-shaped illumination extends substantially transverse to the plane V.

In this example the camera 7 is not placed straight above the dough piece holder 5; the viewing direction K and the plane in which the two rolls 51, 52 are situated include an acute angle. However, it is also possible to place the camera 7 straight above the dough piece holder 5.

The line-shaped illumination projects three lines of light 101, 102, 103 on the top side of the dough piece 2, wherein the lines of light are placed spaced apart from each other in the longitudinal direction L. As shown in figure 1B, the three illumination directions 91, 92, 93 are placed substantially parallel to each other and the three illumination directions 91, 92, 93 and the viewing direction K include a substantially equal angle.

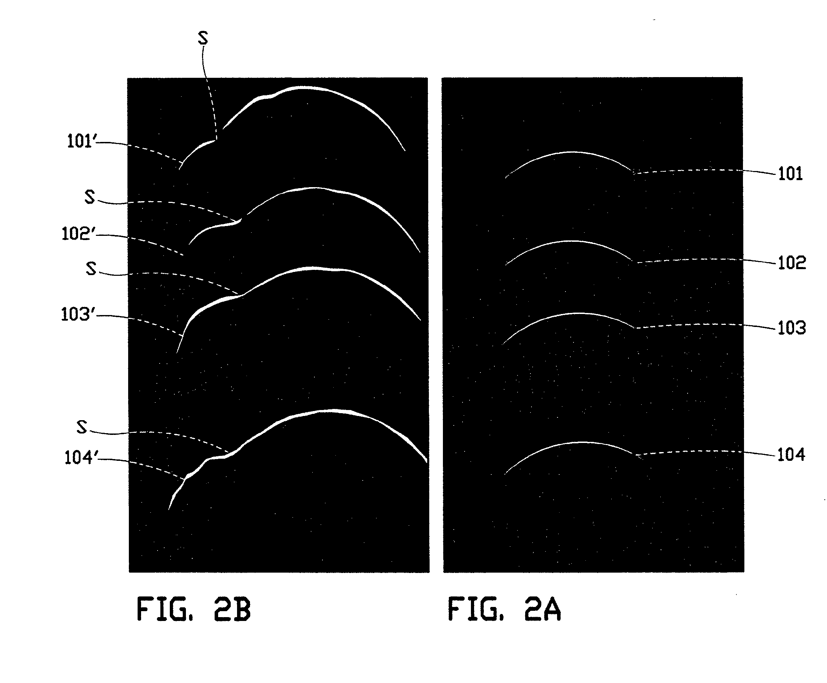

In case a coiled dough piece 2 is placed on the dough piece holder 5, the lines of light 101, 102, 103 are projected on the top side of the dough piece. The projected lines of light 101, 102, 103 are perceived by the camera 7. If there is no seam in the range of vision of the camera 7, the lines of light 101, 102, 103 show a substantially continuous course, as schematically shown in figure 2A (in this exemplary embodiment four line lasers are placed so that as a result an additional line of light 104 is projected on the dough piece 2). If there indeed is a seam in the range of vision of the camera 7, the lines of light 101', 102', 103', 104' show a discontinuity or buckle S at the location of the seam 21, as schematically shown in figure 2B.

It is furthermore noted that the camera 7 can be provided with a filter that substantially only allows light to pass through of a wavelength equalling the wavelength of the light of the line lasers. Because of this the ambient light can largely be filtered away, as a result of which the dark background of figures 2A and 2B is obtained. As a result, on the one hand, the lines of light 101-104, 101'-104' can be detected more easily by the camera 7, and on the other hand changes in the ambient light will have little or no influence on the detection of the lines of light.

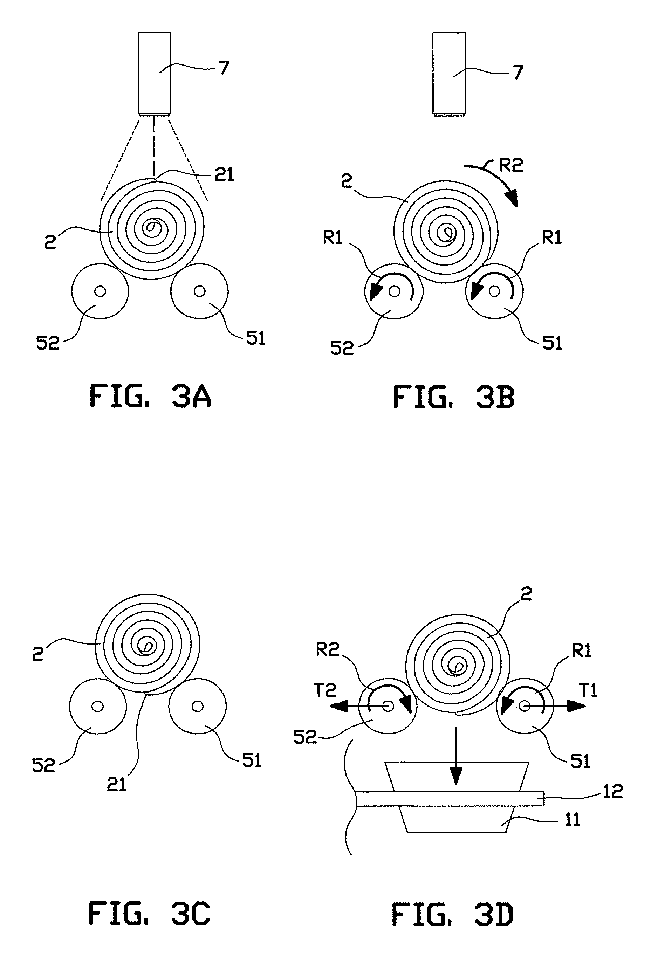

The dough piece holder 5 comprises two rotatable rolls 51, 52 that are placed at least substantially parallel adjacent to each other. The two rotatable rolls 51, 52 preferably can be individually driven. The rolls 51, 52 can furthermore be moved between a first position (as shown in figures 1A and 3A, 3B, 3C) wherein the rolls 51, 52 are placed near each other for supporting a dough piece 2, and a second position (as shown in figure 3D) in which the rolls 51, 52 are placed spaced apart for passing through a dough piece 2 in between the rolls 51, 52, to a baking pan 11 placed underneath the dough piece holder 5. Optionally a number of baking pans 11 can be connected in a frame 12.

The supply device 4 comprises a belt conveyor 41, wherein a roll-up device 42 known per se has been placed above the belt conveyor 41. An example of such a known roll-up device 42 is a metal net that is situated at least partially on the conveyor belt of the belt conveyor 41 and that will coil a dough sheet situated on the conveyor belt into a substantially cylindrical dough piece 2.

After the dough piece 2 has been rolled up, the belt conveyor 41 will place the dough piece 2 on the dough piece holder 5. The dough piece 2 sits still on the rolls 51, 52 of the dough piece holder 5 and is illuminated by the line lasers as shown in figure 1B.

Subsequently the camera 7 records a first image of the dough piece 2 placed on the dough piece holder 5, as schematically shown in figure 3A. In this example the seam 21 is in the range of vision of the camera 7 and the lines of light in the image from the camera 7 will show a buckle at the location of the seam 21 (also see figure 2B).

The camera 7 then transmits a signal relating to the first image to a control device 6. From this signal the control device 6 is able to determine whether the seam is situated in the range of vision of the camera 7.

Subsequently the control device 6 will control the positioning device, particularly the rolls 51, 52 of the dough piece holder 5 depending on the signal relating to the first image. As described in more detail below, the dough piece 2 will in this exemplary embodiment be placed in the baking pan 11 substantially in the same orientation as at was on the rolls 51, 52.

If the control device 6 has determined that the seam is not situated in the range of vision of the camera 7, the seam will be situated at the bottom side of the dough piece 2 that faces away from the camera 7. In that case the dough piece 2 need not be rotated and the control device will move the rolls 51, 52 from the first position as shown in figure 3A to the second position as shown in figure 3D. In that case the rolls 51, 52 are moved apart in the directions T1, T2, respectively, so that the intermediate space in between the rolls 51, 52 becomes large enough for conveying the dough piece 2 downwards in between the rolls 51, 52. Furthermore the rolls 51, 52 are driven so as to rotate in opposite directions R1, R2, as shown in figure 3D. Because of said rotation on the one hand it is ensured that the orientation of the dough piece 2 during conveying it to the baking pan 11 is substantially maintained. On the other hand the motion of the dough piece 2 towards the baking pan 11 can actively be driven by the driven rolls 51, 52, as a result of which the placement of the dough piece 2 in the baking pan 11 can take place faster than is the case in the known devices.

If the control device 6 has determined that the seam is indeed situated in the range of vision of the camera 7, so if the lines of light show a buckle, the control device 6 will let the rolls 51, 52 rotate so that the part of the dough piece 2 that was in the range of vision of the camera 7 is moved to the bottom side of the dough piece 2, as schematically shown in figure 3B. For instance the rolls 51, 52 are driven in the same direction R1, as a result of which the substantially cylindrical dough piece 2 will rotate around in opposite direction R2. After a rotation of substantially 180 degrees the seam will now be situated at the bottom side of the dough piece 2 facing away from the camera 7, as shown in figure 3C. Subsequently the control device will move the rolls 51, 52 from the first position as shown in figure 3C to the second position as shown in figure 3D, as already described above.

In a further exemplary embodiment, at least when the seam is situated in the range of vision of the camera 7, the control device 6 is able to determine the position of the seam 21 from the position of the buckle in the lines of light. The control device 6 can now control the rolls 51, 52 such that the seam 21 of the dough piece 2 is moved to the bottom side of the dough piece 2, as schematically shown in figure 3B. The angular displacement of the dough piece 2 can then be smaller than or equal to 180 degrees in order to rotate the dough piece around either clockwise R2 or anticlockwise R1 in order to place the seam 21 at the bottom side of the dough piece 2.

In a further exemplary embodiment, the rotation of the dough piece 2 and the moving apart of the rolls 51, 52 can take place substantially simultaneously. For such a motion it is not only required that the rotation direction of the rolls 51, 52 be individually adjustable, the rotary speed of the rolls 51, 52 needs to be individually adjustable as well. If one roll 52 stands still at the parting of the rolls 51, 52 and the other roll 51 rotates anticlockwise R1, the dough piece 2 will rotate clockwise R2 during the parting of the rolls 51, 52.

Preferably the speeds of the rolls 51, 52 are set substantially equal to the desired circumferential speed of the circumference of the dough piece 2, so that the dough piece 2 does not deform during rotation and/or ejection of the dough piece 2 to the baking pan 11.

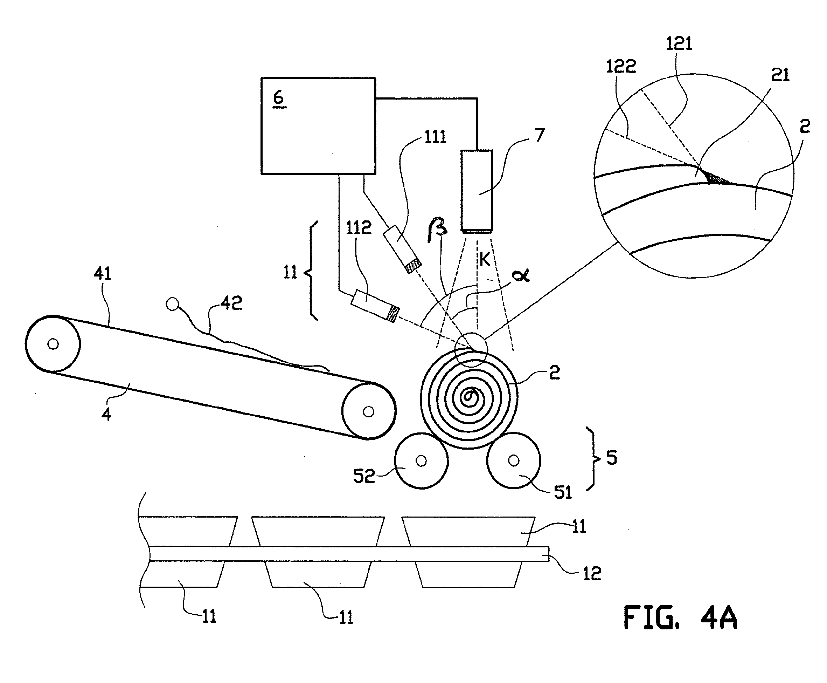

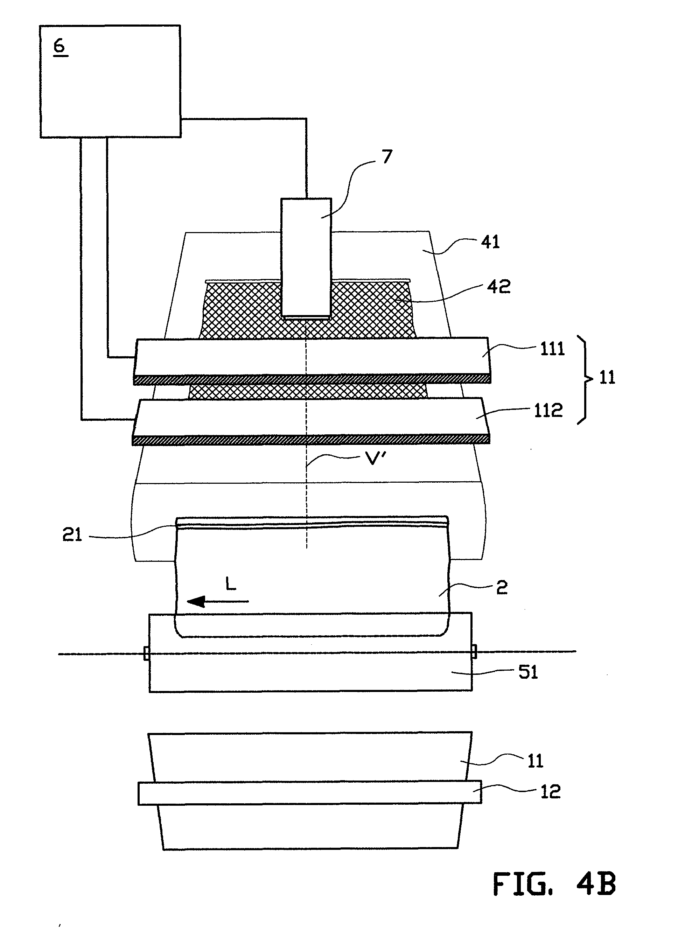

A second exemplary embodiment of an assembly for orienting dough pieces 2 is schematically shown in figures 4A and 4B. This assembly as well comprises a positioning device and a supply device 4 for supplying dough pieces to the positioning device. The positioning device comprises a dough piece holder 5, a control device 6 for controlling the positioning device, and a camera 7. The camera 7 is placed straight above the dough piece holder 5 with a substantially vertical viewing direction K (see figure 4B) towards the dough piece holder 5 for recording images of a dough piece 2 placed on the dough piece holder 5 and is connected to the control device 6 for transmitting a signal relating to the images to the control device 6. The positioning device further comprises an illumination device 11 comprising at least a first lamp 111 and a second lamp 112, the illumination directions 121, 122 (see figure 4A) of which are placed towards the dough piece holder 5, wherein the illumination directions 121, 122 are placed at an angle to the viewing direction K. The first lamp 111 and second lamp 112 are placed next to the camera 7 on the same side, wherein the second lamp 112 is placed on a side of the first lamp 111 facing away from the camera 7. The illumination device 11 is placed on a side of the camera 7 facing the supply device 4.

Just like the device described in German patent application DE 197 47 472 A1, in this exemplary embodiment the seam 21 is recognized by detecting the shadow of the seam 21 if the seam is illuminated by a grazing illumination. For that purpose each lamp 111, 112 comprises a substantially line-shaped light source, or a number of light sources placed on a line, wherein the line-shaped light source or the line extends substantially in the longitudinal direction L of the dough piece 2 as shown in figure 4B.

The lamps 111, 112 are placed such that the second illumination direction 122 and the viewing direction K include an angle β, which differs from the angle α between the first illumination direction 121 and the viewing direction K, as shown in figure 4A. As the lamps 111, 112 are placed at different angles, also relative to the surface of the dough piece 2, they will be able to provide a grazing illumination for different parts of the dough piece 2. For instance in the situation of figure 4, in which the seam 21 is placed on top of the dough piece 2, as shown in the detail drawing, the first lamp 111 does not provide a grazing illumination and substantially no shadow, whereas the second lamp 112 does provide a grazing illumination having a clear shadow effect that can properly be perceived by the camera 7 that is placed substantially straight above the dough piece.

The first lamp 111 and the second lamp 112 further comprise a flash light, and the illumination device is adapted for successively operating the first 111 and the second 112 lamp for successively producing a flash of light.

The camera 7 and the lamps 111, 112 are placed such that the viewing direction K and the illumination directions 121, 122 define a plane V' as schematically indicated in figure 4B. The plane V' extends substantially perpendicular to the longitudinal direction of rolls 51, 52 of the dough piece holder 5, such that the longitudinal direction L of an elongated dough piece 2 on the dough piece holder 5 is oriented substantially transverse to the plane V'.

After a dough sheet has been coiled on the belt conveyor 41 into a substantially cylindrical dough piece 2 by the roll-up device 42, said dough piece 2 is placed on the dough piece holder 5 of a positioning device.

While the dough piece 2 sits still on the rolls 51, 52 of the dough piece holder 5, the camera 7 records a first image of the dough piece 2 placed on the dough piece holder 5, wherein the dough piece is only illuminated by means of the first lamp 111. A first signal relating to the first image is transmitted to a control device 6.

While the dough piece 2 still sits still on the rolls 51, 525, the camera 7 records a second image of the dough piece 2 placed on the dough piece holder 5, wherein the dough piece is only illuminated by means of the second lamp 112. A second signal relating to the second image is transmitted to the control device 6.

From said first and/or second signal the control device 6 is able to determine whether the seam 21 is situated in the range of vision of the camera 7.

Subsequently the control device 6 will control the positioning device, particularly the rolls 51, 52 of the dough piece holder 5 depending on the signal relating to the first image and/or second image.

So instead of rotating the dough piece 4 and detecting when the seam 21 ends up in an area of grazing illumination, so that the seam casts a shadow on the circumference of the dough piece 2 that can be detected by the camera 7, as is the case in German patent application DE 197 47 472 A1, the illumination device successively operates the two or more flash lights that are placed at different angles, as a result of which successively different parts of the dough piece 2 placed in the range of vision of the camera 7 are illuminated in a grazing manner by the various flash lights. Producing flashes of light and recording an image can take place much faster than rotating the dough piece and waiting until the seam 21 passes by, as a result of which the assembly according to the invention is able to work much faster than the known devices do.

After it has first of all been determined whether the seam 21 is situated in the range of vision of the camera 7, and optionally where the seam 21 is situated in the range of vision of the camera 7, the dough piece 21, can be rotated if required and/or ejected to the baking pan 11 underneath, as described above referring to figures 3A, 3B, 3C and 3D.

The above description is included to illustrate the operation of preferred embodiments of the invention and not to limit the scope of the invention. Starting from the above explanation many variations that fall within the scope of the present invention will be evident to an expert.

Summarizing the invention provides an assembly for orienting dough pieces comprising:
a positioning device having a dough piece holder for positioning a dough piece placed on the dough piece holder,
a supply device for supplying dough pieces to the positioning device,
a control device for controlling the positioning device,
a camera placed with a viewing direction towards the dough piece holder for recording images of a dough piece placed on the dough piece holder and for transmitting a signal relating to the images to the control device, and
an illumination device comprising a first lamp, wherein the first lamp is placed with a first illumination direction towards the dough piece holder, wherein the illumination direction is placed at an angle to the viewing direction, wherein the illumination device comprises at least a second lamp, wherein the second lamp is placed with a second illumination direction towards the dough piece holder, and wherein the first and second lamp preferably are placed next to the camera on the same side.

## Claims

1. Assembly (1) for orienting dough pieces (2) comprising:
a positioning device (3) having a dough piece holder (5) for positioning a dough piece placed on the dough piece holder,
a supply device (4) for supplying dough pieces to the positioning device,
a control device (6) for controlling the positioning device,
a camera (7) placed with a viewing direction (K) towards the dough piece holder (5) for recording images of a dough piece placed on the dough piece holder and for transmitting a signal relating to the images to the control device, and
an illumination device (8) comprising a first lamp (81), wherein the first lamp is placed with a first illumination direction (91) towards the dough piece holder, wherein the first illumination direction is placed at an angle to the viewing direction (K),
**characterized in that** the illumination device comprises at least a second lamp (82,83), wherein the second lamp is placed with a second illumination direction (92,93) towards the dough piece holder (5), and wherein the first and second lamp comprise a line laser.

2. Assembly according to claim 1, wherein a position of the camera (7), the first and the second lamp (81,82,83) define a plane (V), and wherein at least one of the line lasers is adapted for providing a line-shaped illumination of a dough piece (2) on the dough piece holder (5), wherein the line extends substantially transverse to the plane (V).

3. Assembly according to claim 2, wherein the dough piece holder (5) is adapted and/or placed such that a longitudinal direction of an elongated dough piece (2) on the dough piece holder is oriented substantially parallel to the plane (V), wherein the first lamp (91) preferably projects a first line of light (101) and the second lamp (82,83) projects a second line of light (102,103), and wherein the first line of light preferably is placed in the longitudinal direction spaced apart from the second line of light.

4. Assembly according to any one of the claims 1-3, wherein the second illumination direction (92,93) and the viewing direction (K) include an angle that substantially equals the angle between the first illumination direction (91) and the viewing direction, wherein preferably the first line-shaped illumination and the second line-shaped illumination are placed substantially parallel to each other.

5. Assembly according to any one of the claims 1-4, wherein the second lamp (82,83) is placed next to the camera on the same side as the first lamp (81), wherein the second lamp is placed on a side of the first lamp, which side faces away from the camera.

6. Assembly (1) for orienting dough pieces (2) comprising:
a positioning device (3) having a dough piece holder (5) for positioning a dough piece placed on the dough piece holder,
a supply device (4) for supplying dough pieces to the positioning device,
a control device (6) for controlling the positioning device,
a camera (7) placed with a viewing direction (K) towards the dough piece holder (5) for recording images of a dough piece placed on the dough piece holder and for transmitting a signal relating to the images to the control device, and
an illumination device (11) comprising a first lamp (111), wherein the first lamp is placed with a first illumination direction (121) towards the dough piece holder, wherein the first illumination direction is placed at an angle to the viewing direction (K),
**characterized in that** the illumination device comprises at least a second lamp (112) placed next to the camera on the same side as the first lamp, wherein the second lamp is placed with a second illumination direction (122) towards the dough piece holder, wherein the second lamp is placed on a side of the first lamp, which side faces away from the camera.

7. Assembly according to claim 6, wherein the first lamp (111) and the second lamp (112) comprise a flash light, and wherein the illumination device (11) is adapted for successively operating the first and the second lamp for successively producing a flash of light, wherein the second illumination direction (122) and the viewing direction (K) preferably include an angle (β) that differs from the angle (α) between the first illumination direction (121) and the viewing direction.

8. Assembly according to claim 6 or 7, wherein a position of the camera, the first and the second lamp define a plane (V'), and wherein the dough piece holder is adapted and/or placed such that a longitudinal direction of an elongated dough piece on the dough piece holder is oriented substantially transverse to the plane.

9. Assembly according to claim 6, 7 or 8, wherein the illumination device (11) is placed on a side of the camera (7) facing the supply device (4).

10. Assembly according to any one of the claims 1-9, wherein the dough piece holder comprises two rotatable rolls (51,52) that are placed at least substantially parallel adjacent to each other.

11. Assembly according to claim 10, wherein the two rotatable rolls can be driven individually, wherein the rolls preferably can be moved between a first position in which the rolls are placed near each other for supporting a dough piece, and a second position in which the rolls are placed spaced apart for passing through a dough piece in between the rolls.

12. Method for orienting dough pieces (2) comprising the steps of:
placing a dough piece on a dough piece holder (5) of a positioning device,
recording a first image of the dough piece placed on the dough piece holder by means of a camera (7) placed with a viewing direction (K) towards the dough piece holder, wherein the dough piece is illuminated by means of an illumination device (8) comprising a first lamp, wherein the first lamp (81) is placed with a first illumination direction towards the dough piece holder, wherein the illumination direction is placed at an angle to the viewing direction,
transmitting the signal relating to the first image to a control device (6),
controlling the positioning device by the control device depending on the signal relating to the first image,
**characterised in that** the illumination device comprises at least a second lamp (82,83) placed next to the camera on the same side as the first lamp, wherein the second lamp is placed with a second illumination direction towards the dough piece holder, wherein the first and second lamp comprise a line laser for projecting line-shaped illuminations on the dough piece, wherein the first lamp projects a first laser line and the second lamp projects a second laser line, wherein the first laser line is projected on the dough piece so as to be spaced apart from the second laser line.

13. Method according to claim 12, wherein a position of the camera, the first and the second lamp define a plane (V), and wherein the line lasers are adapted for providing a line-shaped illumination on a dough piece on the dough piece holder, wherein the line extends substantially transverse on the plane.

14. Method for orienting dough pieces (2) comprising the steps of:
placing a dough piece on a dough piece holder (5) of a positioning device,
recording a first image of the dough piece placed on the dough piece holder by means of a camera (7) placed with a viewing direction (K) towards the dough piece holder, wherein the dough piece is illuminated by means of an illumination device (11) comprising a first lamp (111), wherein the first lamp is placed with a first illumination direction (121) towards the dough piece holder, wherein the illumination direction is placed at an angle (α) to the viewing direction,
transmitting a signal relating to the first image to a control device,
**characterized by**
recording a second image of the dough piece placed on the dough piece holder by means of the camera, wherein the dough piece is illuminated by means of the illumination device comprising a second lamp (112) that is placed next to the camera on the same side as the first lamp, wherein the second lamp is placed with the second illumination direction (122) towards the dough piece holder, wherein the second illumination direction and the viewing direction include an angle (β) that differs from the angle between the first illumination direction and the viewing direction,
transmitting the signal relating to the second image to the control device,
controlling the positioning device by the control device depending on the signal relating to the first image and the second image.

15. Method according to claim 14, wherein the illumination device is adapted for successively operating the first and the second lamp for successively producing a flash of light, and wherein the first image is recorded during a flash of light from the first lamp and the second image is recorded during a flash of light from the second lamp.

16. Method according to any one of the claims 12-15, wherein the dough piece holder comprises two rotatable rolls (51,52) that are placed at least substantially parallel next to each other, wherein the rolls are driven by the control device, wherein the two rotatable rolls preferably are driven individually for positioning a dough piece placed on the dough piece holder, and wherein the rolls preferably are placed near each other in a first position for supporting a dough piece during recording an image, and preferably are moved to a second position in which the rolls are placed spaced apart for passing through a dough piece in between the rolls.

## Patentansprüche

1. Anordnung (1) zum Ausrichten von Teigstücken (2), mit:
einer Positioniereinrichtung (3) mit einem Teigstückhalter (5) zum Positionieren eines Teigstücks, das auf dem Teigstückhalter angeordnet ist,
einer Zufuhreinrichtung (4) zum Zuführen von Teigstücken zu der Positioniereinrichtung,
einer Steuereinrichtung (6) zum Steuern der Positioniereinrichtung,
einer Kamera (7), die mit einer Blickrichtung (K) zu dem Teigstückhalter (5) hin angeordnet ist, zum Aufnehmen von Bildern eines Teigstücks, das auf dem Teigstückhalter angeordnet ist und zum Übertragen eines Signals, das mit den Bildern in Beziehung steht, zu der Steuereinrichtung, und
einer Beleuchtungseinrichtung (8) mit einer ersten Lampe (81), wobei die erste Lampe mit einer ersten Beleuchtungsrichtung (91) zu dem Teigstückhalter hin angeordnet ist, wobei die erste Beleuchtungsrichtung unter einem Winkel zu der Blickrichtung (K) angeordnet ist,
**dadurch gekennzeichnet, dass** die Beleuchtungseinrichtung zumindest eine zweite Lampe (82, 83) aufweist, wobei die zweite Lampe mit einer zweiten Beleuchtungsrichtung (92, 93) zu dem Teigstückhalter (5) hin angeordnet ist und wobei die erste und die zweite Lampe einen Linienlaser aufweisen.

2. Anordnung nach Anspruch 1, wobei
eine Position der Kamera (7), die erste und die zweite Lampe (81, 82, 83) eine Ebene (V) definieren und wobei zumindest einer der Linienlaser zum Bereitstellen einer linienförmigen Beleuchtung eines Teigstücks (2) auf dem Teigstückhalter (5) eingerichtet ist, wobei sich die Linie im Wesentlichen quer zu der Ebene (V) erstreckt.

3. Anordnung gemäß Anspruch 2, wobei
der Teigstückhalter (5) so eingerichtet und/oder angeordnet ist, dass eine Längsrichtung eines länglichen Teigstücks (2) auf dem Teigstückhalter im Wesentlichen parallel zu der Ebene (V) ausgerichtet ist, wobei
die erste Lampe (91) bevorzugt eine erste Lichtlinie (101) projiziert und die zweite Lampe (82, 83) eine zweite Lichtlinie (102, 103) projiziert, und wobei
die erste Lichtlinie bevorzugt in der Längsrichtung, beabstandet von der zweiten Lichtlinie angeordnet ist.

4. Anordnung nach einem der Ansprüche 1-3, wobei
die zweite Beleuchtungsrichtung (92, 93) und die Blickrichtung (K) einen Winkel einschließen, der im Wesentlichen dem Winkel zwischen der ersten Beleuchtungsrichtung (91) und der Blickrichtung gleicht, wobei bevorzugt die erste linienförmige Beleuchtung und die zweite linienförmige Beleuchtung im Wesentlichen parallel zueinander angeordnet sind.

5. Anordnung nach einem der Ansprüche 1-4, wobei
die zweite Lampe (82, 83) neben der Kamera an der gleichen Seite wie die erste Lampe (81) angeordnet ist, wobei die zweite Lampe an einer Seite der ersten Lampe angeordnet ist, wobei diese Seite von der Kamera abgewandt ist.

6. Anordnung (1) zum Ausrichten von Teigstücken (2), mit:
einer Positioniereinrichtung (3) mit einem Teigstückhalter (5) zum Positionieren eines Teigstücks, das auf dem Teigstückhalter platziert ist,
einer Zufuhreinrichtung (4) zum Zuführen von Teigstücken zu der Positioniereinrichtung,
einer Steuereinrichtung (6) zum Steuern der Positioniereinrichtung,
einer Kamera (7), die mit einer Blickrichtung (K) zu dem Teigstückhalter (5) hin angeordnet ist, zum Aufnehmen von Bildern eines Teigstücks, das auf dem Teigstückhalter angeordnet ist und zum Übertragen eines Signals, das mit den Bildern in Beziehung steht, zu der Steuereinrichtung, und
einer Beleuchtungseinrichtung (11) mit einer ersten Lampe (111), wobei die erste Lampe mit einer ersten Beleuchtungsrichtung (121) zu dem Teigstückhalter hin angeordnet ist, wobei die erste Beleuchtungsrichtung unter einem Winkel zu der Blickrichtung (K), angeordnet ist
**dadurch gekennzeichnet, dass** die Beleuchtungseinrichtung zumindest eine zweite Lampe (112) aufweist, die neben der Kamera an der gleichen Seite wie die erste Lampe angeordnet ist, wobei die zweite Lampe mit einer zweiten Beleuchtungsrichtung (122) zu dem Teigstückhalter hin angeordnet ist, wobei die zweite Lampe an einer Seite der ersten Lampe angeordnet ist, wobei diese Seite von der Kamera abgewandt ist.

7. Anordnung nach Anspruch 6, wobei
die erste Lampe (111) und die zweite Lampe (112) ein Blitzlicht aufweisen und wobei die Beleuchtungseinrichtung (11) eingerichtet ist, um die erste und die zweite Lampe nacheinander zu betätigen, um nacheinander einen Lichtblitz zu erzeugen, wobei die zweite Beleuchtungsrichtung (122) und die Blickrichtung (K) bevorzugt einen Winkel (β) einschließen, der sich von Winkel (α) zwischen der ersten Beleuchtungsrichtung (121) und der Blickrichtung unterscheidet.

8. Anordnung nach Anspruch 6 oder 7, wobei
eine Position der Kamera, die erste und die zweite Lampe eine Ebene (V') definieren und wobei der Teigstückhalter so eingerichtet und/oder angeordnet ist, dass eine Längsrichtung eines länglichen Teigstückes auf dem Teigstückhalter im Wesentlichen quer zu der Ebene ausgerichtet ist.

9. Anordnung nach Anspruch 6, 7 oder 8, wobei
die Beleuchtungseinrichtung (11) an einer Seite der Kamera (7), der Zufuhreinrichtung (4) zugewandt, angeordnet ist.

10. Anordnung nach einem der Ansprüche 1-9, wobei
der Teigstückhalter zwei drehbare Rollen aufweist, die zumindest im Wesentlichen parallel angrenzend zueinander angeordnet sind.

11. Anordnung nach Anspruch 10, wobei
die zwei drehbaren Rollen individuell angetrieben werden können, wobei die Rollen bevorzugt zwischen einer ersten Position in der die Rollen zum Halten eines Teigstückes nah zueinander angeordnet sind und einer zweiten Position bewegt werden können, in der die Rollen beabstandet sind, um ein Teigstück zwischen den Rollen durchzuführen.

12. Verfahren zum Ausrichten von Teigstücken (2) mit den Schritten:
Anordnen eines Teigstücks auf einem Teigstückhalter (5) einer Positioniereinrichtung,
Aufnehmen eines ersten Bildes des Teigstücks, das auf dem Teigstückhalter angeordnet ist, mittels einer Kamera (7), die mit einer Blickrichtung (K) zu dem Teigstückhalter hin angeordnet ist, wobei das Teigstück mittels einer Beleuchtungseinrichtung (8) beleuchtet wird, die eine erste Lampe aufweist, wobei die erste Lampe (81) mit einer ersten Beleuchtungsrichtung zu dem Teigstückhalter hin angeordnet ist, wobei die Beleuchtungsrichtung unter einem Winkel zu der Blickrichtung angeordnet ist,
Übertragen eines Signals, das mit dem ersten Bild in Beziehung steht, zu einer Steuereinrichtung (6),
Steuern der Positioniereinrichtung durch die Steuereinrichtung in Abhängigkeit des Signals, das mit dem ersten Bild in Beziehung steht,
**dadurch gekennzeichnet, dass** die Beleuchtungseinrichtung zumindest eine zweite Lampe (82, 83) aufweist, die neben der Kamera an der gleichen Seite wie die erste Lampe angeordnet ist, wobei die zweite Lampe mit einer zweiten Beleuchtungsrichtung zu dem Teigstückhalter hin angeordnet ist, wobei die erste und zweite Lampe einen Linienlaser zum Projizieren linienförmiger Beleuchtungen auf das Teigstück aufweisen, wobei die erste Lampe eine erste Laserlinie projiziert und die zweite Lampe eine zweite Laserlinie projiziert, wobei die erste Laserlinie derart auf das Teigstück projiziert wird, dass sie von der zweiten Laserlinie beabstandet ist.

13. Verfahren nach Anspruch 12, wobei
eine Position der Kamera, die erste und die zweite Lampe eine Ebene (V) definieren, und wobei die Linienlaser zum Bereitstellen einer linienförmigen Beleuchtung auf einem Teigstück auf dem Teigstückhalter eingerichtet sind, wobei sich die Linie im Wesentlichen quer zu der Ebene erstreckt.

14. Verfahren zum Ausrichten von Teigstücken (2) mit den Schritten:
Anordnen eines Teigstücks auf einem Teigstückhalter (5) einer Positioniereinrichtung,
Aufnehmen eines ersten Bildes des Teigstücks, das auf dem Teigstückhalter angeordnet ist, mittels einer Kamera (7), die mit einer Blickrichtung (K) zu dem Teigstückhalter hin angeordnet ist, wobei das Teigstück mittels einer Beleuchtungseinrichtung (11) beleuchtet wird, die eine erste Lampe (111) aufweist, wobei die erste Lampe mit einer ersten Beleuchtungsrichtung (121) zu dem Teigstückhalter hin angeordnet ist, wobei die Beleuchtungsrichtung unter einem Winkel (α) zu der Blickrichtung angeordnet ist,
Übertragen eines Signals, das mit dem ersten Bild in Beziehung steht, zu einer Steuereinrichtung,
**gekennzeichnet durch**
Aufnehmen eines zweiten Bildes des Teigstücks, das auf dem Teigstückhalter angeordnet ist, mittels der Kamera, wobei das Teigstück mittels der Beleuchtungseinrichtung, die eine zweite Lampe (112) aufweist, die neben der Kamera an der gleichen Seite wie die erste Lampe angeordnet ist, beleuchtet wird, wobei die zweite Lampe mit der zweiten Beleuchtungsrichtung (122) zu dem Teigstückhalter hin angeordnet ist, wobei die zweite Beleuchtungsrichtung und die Blickrichtung einen Winkel (β) einschließen, der sich von dem Winkel zwischen der ersten Beleuchtungsrichtung und der Blickrichtung unterscheidet,
Übertragen des Signals, das mit dem zweiten Bild in Beziehung steht, zu der Steuereinrichtung,
Steuern der Positioniereinrichtung **durch** die Steuereinrichtungen in Abhängigkeit von dem Signal, das mit dem ersten Bild und dem zweiten Bild in Beziehung steht.

15. Verfahren nach Anspruch 14, wobei
die Beleuchtungseinrichtung eingerichtet ist, um nacheinander die erste und zweite Lampe zu betätigen um nacheinander einen Lichtblitz zu erzeugen, und wobei das erste Bild während eines Lichtblitzes von der ersten Lampe aufgezeichnet wird und das zweite Bild während eines Lichtblitzes von der zweiten Lampe aufgezeichnet wird.

16. Verfahren nach einem der Ansprüche 12-15, wobei
der Teigstückhalter zwei drehbare Rollen (51, 52) aufweist, die im Wesentlichen parallel nebeneinander angeordnet sind, wobei die Rollen durch die Steuereinrichtung angetrieben werden, wobei die zwei drehbaren Rollen bevorzugt individuell zum Positionieren eines Teigstücks, das auf dem Teigstückhalter angeordnet ist, angetrieben werden, und wobei die Rollen bevorzugt in einer ersten Position nahe zueinander angeordnet sind, um ein Teigstück während der Aufnahme eines Bildes zu halten und bevorzugt auf eine zweite Position gefahren werden, in der die Rollen zum Durchführen eines Teigstücks zwischen den Rollen, beabstandet angeordnet sind.

## Revendications

1. Ensemble (1) pour orienter des morceaux de pâte (2) comprenant :
un dispositif de positionnement (3) ayant un support de morceau de pâte (5) destiné à positionner un morceau de pâte placé sur le support de morceau de pâte,
un dispositif d'alimentation (4) destiné à alimenter le dispositif de positionnement en morceaux de pâte,
un dispositif de commande (6) destiné à commander le dispositif de positionnement,
une caméra (7) placée dans une direction de visualisation (K) vers le support de morceau de pâte (5) pour enregistrer des images d'un morceau de pâte placé sur le support de morceau de pâte et pour transmettre un signal lié aux images au dispositif de commande, et
un dispositif d'éclairage (8) comprenant une première lampe (81), dans lequel la première lampe est placée selon une première direction d'éclairage (91) vers le support de morceau de pâte, dans lequel la première direction d'éclairage est placée à un angle par rapport à la direction de visualisation (K),
**caractérisé en ce que** le dispositif d'éclairage comprend au moins une deuxième lampe (82, 83), dans lequel la deuxième lampe est placée selon une deuxième direction d'éclairage (92, 93) vers le support de morceau de pâte (5), et dans lequel les première et deuxième lampes comprennent un laser à raies.

2. Ensemble selon la revendication 1, dans lequel une position de la caméra (7), les première et deuxième lampes (81, 82, 83) définissent un plan (V), et dans lequel au moins l'un des lasers à raies est adapté pour fournir un éclairage en forme de raies d'un morceau de pâte (2) sur le support de morceau de pâte (5), dans lequel la raie s'étend essentiellement transversalement par rapport au plan (V).

3. Ensemble selon la revendication 2, dans lequel le support de morceau de pâte (5) est adapté et/ou placé de sorte qu'une direction longitudinale d'un morceau de pâte allongé (2) sur le support de morceau de pâte soit orientée essentiellement parallèlement au plan (V), dans lequel la première lampe (91) projette, de préférence, une première raie de lumière (101) et la deuxième lampe (82, 83) projette une deuxième raie de lumière (102, 103), et dans lequel la première raie de lumière est de préférence placée dans la direction longitudinale de manière à être espacée de la deuxième raie de lumière.

4. Ensemble selon l'une quelconque des revendications 1 à 3, dans lequel la deuxième direction d'éclairage (92, 93) et la direction de visualisation (K) comportent un angle qui est essentiellement égal à l'angle entre la première direction d'éclairage (91) et la direction de visualisation, dans lequel de préférence le premier éclairage en forme de raies et le deuxième éclairage en forme de raies sont placés essentiellement parallèlement l'un à l'autre.

5. Ensemble selon l'une quelconque des revendications 1 à 4, dans lequel la deuxième lampe (82, 83) est placée à côté de la caméra sur le même côté que la première lampe (81), dans lequel la deuxième lampe est placée sur un côté de la première lampe, lequel côté est opposé à la caméra.

6. Ensemble (1) pour orienter des morceaux de pâte (2) comprenant :
un dispositif de positionnement (3) ayant un support de morceau de pâte (5) destiné à positionner un morceau de pâte placé sur le support de morceau de pâte,
un dispositif d'alimentation (4) destiné à alimenter le dispositif de positionnement en morceaux de pâte,
un dispositif de commande (6) destiné à commander le dispositif de positionnement,
une caméra (7) placée selon une direction de visualisation (K) vers le support de morceau de pâte (5) pour enregistrer des images d'un morceau de pâte placé sur le support de morceau de pâte et pour transmettre un signal lié aux images au dispositif de commande, et
un dispositif d'éclairage (11) comprenant une première lampe (111), dans lequel la première lampe est placée selon une première direction d'éclairage (121) vers le support de morceau de pâte, dans lequel la première direction d'éclairage est placée à un angle par rapport à la direction de visualisation (K),
**caractérisé en ce que** le dispositif d'éclairage comprend au moins une deuxième lampe (112) placée à côté de la caméra sur le même côté que la première lampe, dans lequel la deuxième lampe est placée selon une deuxième direction d'éclairage (122) vers le support de morceau de pâte, dans lequel la deuxième lampe est placée sur un côté de la première lampe, lequel côté est opposé à la caméra.

7. Ensemble selon la revendication 6, dans lequel la première lampe (111) et la deuxième lampe (112) comprennent une lampe à éclair, et dans lequel le dispositif d'éclairage (11) est adapté pour faire fonctionner successivement les première et deuxième lampes afin de produire successivement un éclair de lumière, dans lequel la deuxième direction d'éclairage (122) et la direction de visualisation (K) comportent de préférence un angle (β) qui diffère de l'angle (α) entre la première direction d'éclairage (121) et la direction de visualisation.

8. Ensemble selon la revendication 6 ou 7, dans lequel une position de la caméra, les première et deuxième lampes définissent un plan (V'), et dans lequel le support de morceau de pâte est adapté et/ou placé de sorte qu'une direction longitudinale d'un morceau de pâte allongé sur le support de morceau de pâte soit orientée essentiellement transversalement par rapport au plan.

9. Ensemble selon la revendication 6, 7 ou 8, dans lequel le dispositif d'éclairage (11) est placé sur un côté de la caméra (7) faisant face au dispositif d'alimentation (4).

10. Ensemble selon l'une quelconque des revendications 1 à 9, dans lequel le support de morceau de pâte comprend deux rouleaux rotatifs (51, 52) qui sont placés au moins essentiellement parallèlement de manière adjacente l'un à l'autre.

11. Ensemble selon la revendication 10, dans lequel les deux rouleaux rotatifs peuvent être entraînés individuellement, dans lequel les rouleaux peuvent de préférence être déplacés entre une première position dans laquelle les rouleaux sont placés l'un à proximité de l'autre pour supporter un morceau de pâte, et une deuxième position dans laquelle les rouleaux sont placés de manière à être espacés pour faire passer un morceau de pâte entre les rouleaux.

12. Procédé pour orienter des morceaux de pâte (2) comprenant les étapes consistant :
à placer un morceau de pâte sur un support de morceau de pâte (5) d'un dispositif de positionnement,
à enregistrer une première image du morceau de pâte placé sur le support de morceau de pâte au moyen d'une caméra (7) placée selon une direction de visualisation (K) vers le support de morceau de pâte, dans lequel le morceau de pâte est éclairé au moyen d'un dispositif d'éclairage (8) comprenant une première lampe, dans lequel la première lampe (81) est placée selon une première direction d'éclairage vers le support de morceau de pâte, dans lequel la direction d'éclairage est placée à un angle par rapport à la direction de visualisation,
à transmettre le signal lié à la première image à un dispositif de commande (6),
à commander le dispositif de positionnement par le dispositif de commande en fonction du signal lié à la première image,
**caractérisé en ce que** le dispositif d'éclairage comprend au moins une deuxième lampe (82, 83) placée à côté de la caméra sur le même côté que la première lampe, dans lequel la deuxième lampe est placée selon une deuxième direction d'éclairage vers le support de morceau de pâte, dans lequel les première et deuxième lampes comprennent un laser à raies pour projeter des éclairages en forme de raies sur le morceau de pâte, dans lequel la première lampe projette une première raie laser et la deuxième lampe projette une deuxième raie laser, dans lequel la première raie laser est projetée sur le morceau de pâte de manière à être espacée de la deuxième raie laser.

13. Procédé selon la revendication 12, dans lequel une position de la caméra, les première et deuxième lampes définissent un plan (V), et dans lequel les lasers à raies sont adaptés pour fournir un éclairage en forme de raies sur un morceau de pâte sur le support de morceau de pâte, dans lequel la raie s'étend essentiellement transversalement sur le plan.

14. Procédé pour orienter des morceaux de pâte (2) comprenant les étapes consistant :
à placer un morceau de pâte sur un support de morceau de pâte (5) d'un dispositif de positionnement,
à enregistrer une première image du morceau de pâte placé sur le support de morceau de pâte au moyen d'une caméra (7) placée selon une directions de visualisation (K) vers le support de morceau de pâte, dans lequel le morceau de pâte est éclairé au moyen d'un dispositif d'éclairage (11) comprenant une première lampe (111), dans lequel la première lampe est placée selon une première direction d'éclairage (121) vers le support de morceau de pâte, dans lequel la direction d'éclairage est placée à un angle (α) par rapport à la direction de visualisation,
à transmettre un signal lié à la première image à un dispositif de commande,
**caractérisé par** le fait
d'enregistrer une deuxième image du morceau de pâte placé sur le support de morceau de pâte au moyen de la caméra, dans lequel le morceau de pâte est éclairé au moyen du dispositif d'éclairage comprenant une deuxième lampe (112) qui est placée à côté de la caméra sur le même côté que la première lampe, dans lequel la deuxième lampe est placée selon la deuxième direction d'éclairage (122) vers le support de morceau de pâte, dans lequel la deuxième direction d'éclairage et la direction de visualisation comportent un angle (β) qui diffère de l'angle entre la première direction d'éclairage et la direction de visualisation,
de transmettre le signal lié à la deuxième image au dispositif de commande,
de commander le dispositif de positionnement par le dispositif de commande en fonction du signal lié à la première image et la deuxième image.

15. Procédé selon la revendication 14, dans lequel le dispositif d'éclairage est adapté pour faire fonctionner successivement les première et deuxième lampes afin de produire successivement un éclair de lumière, et dans lequel la première image est enregistrée lors d'un éclair de lumière provenant de la première lampe et la deuxième image est enregistrée lors d'un éclair de lumière provenant de la deuxième lampe.

16. Procédé selon l'une quelconque des revendications 12 à 15, dans lequel le support de morceau de pâte comprend deux rouleaux rotatifs (51, 52) qui sont placés au moins essentiellement parallèlement l'un à côté de l'autre, dans lequel les rouleaux sont entraînés par le dispositif de commande, dans lequel les deux rouleaux rotatifs sont de préférence entraînés individuellement pour positionner un morceau de pâte placé sur le support de morceau de pâte, et dans lequel les rouleaux sont de préférence placés l'un à proximité de l'autre dans une première position pour supporter un morceau de pâte pendant l'enregistrement d'une image, et de préférence sont déplacés vers une deuxième position dans laquelle les rouleaux sont placés de manière à être espacés pour faire passer un morceau de pâte entre les rouleaux.
